# EUROPÄISCHE PATENTSCHRIFT

(11) **EP 1 279 946 B1**
(45) Veröffentlichungstag und Bekanntmachung des Hinweises auf die Patenterteilung: **06.12.2017**
(21) Anmeldenummer: 02016534.6
(22) Anmeldetag: 24.07.2002
(51) Int. Cl.: G01N 21/64, G01N 21/76

(54) **Vorrichtung zur wahlweisen Messung von Lumineszenz- und/oder Fluoreszenzstrahlung**
Apparatus for alternative measurement of luminescence and/or fluorescence radiation
Dispositif pour mesurer au choix une radiation de luminescence et/ou de fluorescence

(30) Priorität: 28.07.2001 DE 10136863
(43) Veröffentlichungstag der Anmeldung: 29.01.2003
(73) Patentinhaber: Berthold Technologies GmbH & Co. KG, 75323 Bad Wildbad (DE)
(72) Erfinder: Breitkopf, Berthold, 75334 Straubenhardt (DE); Peukert, Michael, 75334 Straubenhardt (DE); Klaiber, Norbert, 75337 Entklösterle (DE)
(74) Vertreter: Schön, Thilo

(56) Entgegenhaltungen:
- EP-A- 0 803 724
- EP-A1- 0 083 650
- WO-A-01/63262
- GB-A- 2 339 900
- GB-A- 2 381 311
- US-A- 5 206 568
- US-A- 6 057 114

## Beschreibung

### Technischer Hintergrund

Verschiedene Hersteller von Strahlungsmessgeräten unter Verwendung von Mikroplatten sind im Zuge zurückgehender Budgets und schwieriger Kostenstruktur im Forschungsbereich dazu übergegangen mehrfach einsetzbare Geräten anzubieten. Dem Kunden möchte man damit ein Mehrzweckgerät für möglichst viele Messverfahren, insbesondere Chemilumineszenz- und Fluoreszenzmessungen zur Verfügung stellen, so dass die Anschaffung mehrerer Einzelgeräte entfällt. Trotz des höheren Preises, verglichen mit einem auf ein Messverfahren spezialisierenden Gerät, erfreuen sich diese Mehrzweckgeräte großer Nachfrage. Dem Kunden wird suggeriert, dass mit dem Kauf eines solchen Mehrzweckgeräts der Kauf von einzelnen Geräten überflüssig ist, zumal der Preis des Mehrzweckgerätes unter der Summe der dedizierten Geräte liegt.

Zur Zeit gibt es eine Vielzahl von verschiedenen Geräten angefangen vom "dual label" Gerät für Lumineszenz- und Fluoreszenzmessungen in der untersten Kategorie, über "Multilabelreader" für Fluoreszenz-, Lumineszenz- und Photometriemessungen im mittleren Preissegment bis hin zu "High-End"-Geräten für Lumineszenz, Fluoreszenz, Photometrie, Fluoreszenz Polarisation, Bioluminescence Resonance Energy Transfer (BRET), Fluorescence Resonance Energy Transfer (FRET), Time Resolved Fluorescence (TRF), Liquid Scintillation Counting (LSC) in den verschiedensten Kombinationen.

Leider sind beim Design solcher Mehrzweckgeräte für die gewünschten Messarten so viele Kompromisse zu schließen, dass am Ende deren Leistungsfähigkeit bei den einzelnen Messverfahren deutlich hinter des jeweiligen Spezialgerätes liegt.

Das Hauptproblem der unterschiedlichen Qualitäten der Funktionen eines Mehrzweckgeräts liegt in den unterschiedlichen Anforderungen der Messtechnik begründet:
Für Fluoreszenzmessungen ist die Abbildung der Probe auf den Detektor und die parallele Lichtführung durch die Filter essentiell. Da das nachgewiesene Licht nur von derjenigen Probe kommt,die von der Anregungslichtquelle beaufschlagt wird, gibt es das Problem des "Crosstalk", also das störende Einstreuen von Licht aus benachbarten Proben praktisch nicht. Die Effizienz der Lichtmessung muss bei üblichen Fluoreszenzmessungen nicht sehr hoch sein, da die Intensität der Anregungslichtquellen hoch sein kann.

Die Nachweisempfindlichkeit für spezifische Fluorophore ist meist durch die unspezifische Fluoreszenz von Lösungsmitteln, organischen Substanzen sowie Gerätebauteilen limitiert. Diese unspezifische Fluoreszenz hat im allgemeinen sehr geringe Abklingzeiten (ca. 4 ns für Proteine). Eine Erhöhung der Empfindlichkeit wird durch die "Time-resolved-Fluoreszenz" erreicht. Dazu wurden Fluoreszenzsysteme mit längeren Abklingzeiten von z.B. einigen Hundert Mikrosekunden entwickelt. Die Probe wird mit einem kurzen Lichtblitz von z. B. 0,4 µs angeregt, während der Detektor ausgeschaltet bzw. passiviert ist. Erst nach Abklingen der unspezifischen Fluoreszenz wird der Detektor aktiv geschaltet und das Signal etwa 1 ms lang integriert. Für jede Probe wird dieser Ablauf z.B. 1000-mal zyklisch wiederholt. Die Verwendung von Filtern erhöht die Empfindlichkeit nochmals.

Eine weitere Variante der Fluoreszenzmessung ist Fluoreszenzpolarisation (FP). Dabei wird die Tatsache benutzt, dass sich in der sehr kurzen Zeit zwischen Anregung des Fluorophors und der Aussendung der Fluoreszenzstrahlung das Molekül im Raum dreht und dabei die Polarisationsebene mitgedreht wird. Da kleine (oder ungebundene) Moleküle schneller rotieren als grosse (oder gebundene), kann durch Messung des Polarisationsgrades eine Information über den Bindungsgrad gewonnen werden. Dieses Verfahren erfordert keine Trennung von gebundenen und ungebundenen Molekülen und ist daher für eine vereinfachte Durchführung besonders geeignet. Für die Bestimmung des Polarisationsgrades wird die Probe mit linear polarisiertem Licht beleuchtet und im emittierten Fluoreszenzlicht die nicht gedrehte (parallele) und gedrehte (orthogonale) Komponente gemessen. Dies erfolgt mittels zweier weiterer Polarisationsfilter (Analysatoren).

Bei Chemilumineszenzmessungen hingegen, bei der die Photonen durch eine chemische Reaktion erzeugt werden, ist deren Anzahl sehr viel geringer als bei Fluoreszenz. Diese Systeme müssen daher auf das möglichst vollständige 'Einsammeln' aller emittierten Photonen und deren vollständige Detektion optimiert werden. Diese Systeme bestehen normalerweise aus optischen Systemen, z.B. Lichtwellenleitern, die direkt an der Probe die Photonen aufnehmen und auf den Detektor weiterleiten. Die Zwischenschaltung von Filtern ist bei Standard - Chemilumineszenzmessungen nicht erforderlich.

Eine neuere Chemilumineszenzmessmethode, insbesondere zur Untersuchung von Zelleigenschaften, z. B. Proteinen, ist das oben genannte BRET. Für diese Messungen ist es erforderlich, Filter vor dem Detektor (Emissionsfilter) vorzusehen. Daher verwenden die meisten Hersteller für BRET ihre Fluorometer, bei denen ohnehin Emissionsfilter zur Ausstattung gehören. Wie bei allen Chemilumineszenzmessungen wird allerdings auch bei BRET die Photonenemission durch eine chemische Reaktion ausgelöst und daher sind nur eine geringe Anzahl von Photonen vorhanden. Die Empfindlichkeit von Fluorometern ist daher zur qualitativ hochwertigen Durchführung von BRET-Messungen nicht ausreichend.

### Stand der Technik

Aus der EP 0 803 724 A2 ist ein Multilabel- Messgerät bekannt, das die obengenannten Probleme nicht vermeidet, hauptsächlich, weil der dort für alle Messungen ausgelegte, verschiebbare Spiegelblock eine hocheffiziente Lichtführung zur Detektion schwacher Lumineszenzsignale verhindert. Der von der Linse erfasste Raumwinkel des von der Probe abgestrahlten Lichts ist klein, so dass nur ein geringer Teil der ursprünglich ausgesendeten Photonen zum Detektor gelangen. Außerdem ist bei dieser Anordnung das Übersprechen von Proben in benachbarten Probenbehältern der Mikroplatte hoch. Dies führt zu falschen Messergebnissen, wenn eine stark leuchtende Probe neben einer schwach leuchtenden Probe so stark strahlt, dass an der schwach leutenden Probe ein zu hoher Wert gemessen wird.

Aus diesen Beispielen wird ersichtlich, dass die Anforderungen an ein Mehrfach-Messsystem, um optimal zu arbeiten, sehr vielfältig sind. Aus Gründen der Optik, der geometrischen Abmessungen, der Verfügbarkeit von Linsen mit speziellem Material und gewissen Brechungsindizes, mussten, wenn ein mehr oder weniger gemeinsamer optischer Pfad verwendet werden soll, Kompromisse eingegangen werden, die insgesamt zu einer nur geringen Leistungsfähigkeit führen.

Die gattungsbildende GB 2 399 900 A beschreibt eine Vorrichtung zum Messen von Lumineszenz- und Fluoreszenzstrahlung an Mikropatten, wobei die Ein- und Auskopplung von Licht ausschließlich von unten erfolgt. Die Vorrichtung ist dafür ausgelegt, dass wenigstens zwei Messungen gleichzeitig ausgeführt werden können, um mehr Messungen pro Zeiteinheit durchführen zu können. Die beiden hierfür vorgesehenen Messlichtpfade sind identisch ausgeführt. Die Emissionsfilterpositionen und die Detektoren sind ortsfest.

Die WO 83/00384 beschreibt eine Vorrichtung, mit der spektroskopische Absorptionsmessungen gleichzeitig an einer Vielzahl von ortsfesten Küvetten durchgeführt werden können. Auch hier sind alle Messlichtpfade gleichartig, wobei die Durchstrahlung der Proben in horizontaler Richtung erfolgt.

### Darstellung der Erfindung

Aufgabe der Erfindung ist die Schaffung eines Mehrfachmessgeräts, dessen Messeigenschaften praktisch nicht hinter den Messeigenschaften entsprechender Einzelgeräte zurückstehen.

Diese Aufgabe wird gemäß den Merkmalen des Patentanspruchs 1 gelöst.

Die Erfindungsidee wendet sich von der bekannten Lösung ab, dass alle Funktionen mit einem feststehenden Detektor, einer Messposition, einer feststehenden Anregungsquelle und, am wichtigsten, einem optischen Pfad (Messlichtpfad) gemessen werden müssen.

Die Erfindung zielt auf für jede Messfunktion optimierte optische Verhältnissen ab und schafft die Voraussetzungen, um die erforderlichen Komponenten in einem Gehäuse unterzubringen. Es können hierbei für jede Messfunktion individuelle Detektoren und Strahlungsquellen eingesetzt werden, der Detektor und auch die Fluoreszenz-anregende Strahlungsquelle mit ihren zugehörigen Anregungsfiltern sind gemäß vorteilhaften Ausgestaltungen beweglich und werden motorisch in die für die jeweilige Messung benötigte Position gebracht, während die übrigen Bauteile des optischen Systems stationär sind.

Für fast alle Detektionstechniken sind Emissionsfilter erforderlich. Durch die erfindungsgemässe Verwendung eines einzigen, bei allen Messungen einsetzbaren gemeinsamen Filterträgers (Filterrad oder Filterschieber) mit Filtern für die verschiedenen Messlichtpfade wird das Gerät erheblich vereinfacht. Die möglichen Meßpositionen auf der Probenebene liegen vorzugsweise in einer durch die Mittelpunkte der Filter verlaufenden Vertikalfläche. Bei Verwendung eines Filterrades mit in gleichem Abstand zum Mittelpunkt angeordneten Filtern liegen die Messpositionen auf der Probenebene somit auf einem Kreisbogen, bei Verwendung eines Filterschiebers mit linear angeordneten Filtern liegen die Messpositionen auf der Probenebene auf einer Geraden.

Der für die verschiedenen Detektionsmodi verwendete gemeinsame Detektor (z. B. ein Photomultiplier) wird dazu auf einem entsprechenden Kreisbogen verfahren. Im Fall eines Filterschiebers als Filterträger wird der Detektor durch eine Linearbewegung in die verschiedenen Filter- bzw. Messpositionen gebracht.

Folgende Messungen und Kombinationen sind beispielsweise mit der erfindungsgemässen Vorrichtung durchführbar:
1. Fluoreszenz von oben, kombinierbar mit FP
2. Fluoreszenz von unten
3. Chemilumineszenz, kombinierbar mit BRET
4. Photometrie (Detektor unten) kombiniert mit 1. oder separat
5. TRF, eigene Messposition oder Kombination mit 1. und 2.

Von besonderem Vorteil erweist sich der gemeinsame Filterträger auch deswegen, da dieser auch ein Filter in den Messlichtpfad einbringen kann, wenn BRET-Messungen mit der Lumineszenzmesseinrichtung des erfindungsgemässen Geräts durchgeführt werden, die, wie unten näher erläutert, aufgrund der hier gewährleisteten hohen Nachweisempfindlichkeit für die emittierten Photonen für diese Art von Messung besonders geeignet ist.

Der gemeinsame Filterträger und dessen Anordnung in einer Horizontalebene über der Probenebene kann auch bei einem Chemilumineszenzmessgerät als Einzelmessgerät die grundlegende Massnahme für einen kompakten Aufbau bei weiten Anwendungsspektrum sein.

### Kurze Beschreibung der Zeichnungen:

Bevorzugte Ausführungsbeispiele werden nun anhand von Zeichnungen näher erläutert; es zeigen:
- Fig. 1:: eine schematische Darstellung der Messlichtpfade,
- Fig. 2:: eine perspektivische Darstellung der wesentlichen Bauteile,
- Fig. 3:: eine erste perspektivische Aufsicht von oben auf die gesamte Vorrichtung,
- Fig. 4:: eine zweite perspektivische Aufsicht von oben auf die gesamte Vorrichtung,
- Fig. 5:: eine perspektivische Unteransicht der gesamtan Vorrichtung,
- Fig. 6:: einen Vertikalschnitt in der Ebene der Achsen A-A und B-B in Figur 2,
- Fig. 7:: das Detail X in Figur 6,
- Fig. 8:: eine Teilaufsicht von oben auf die Anordnung gemäss Figur 6,

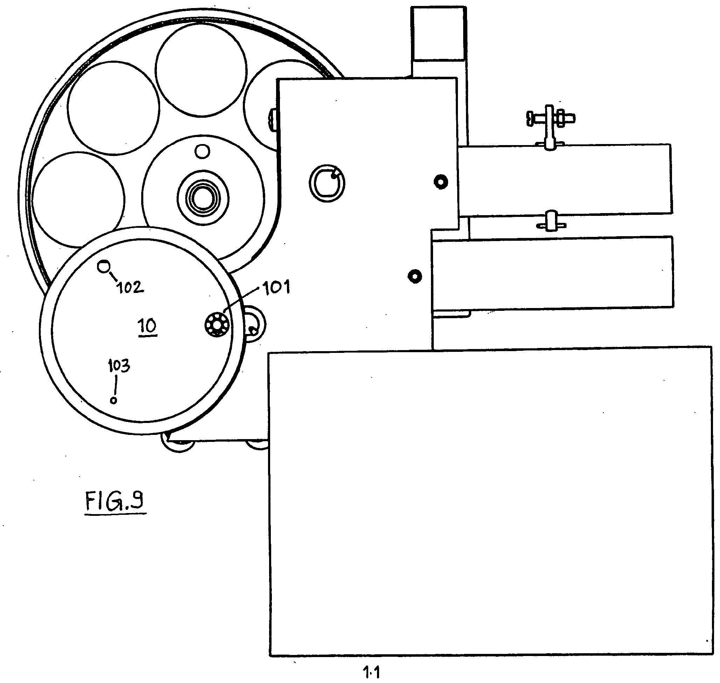

- Fig. 9:: eine Teilaufsicht von unten auf die Anordnung gemäss Figur 6,

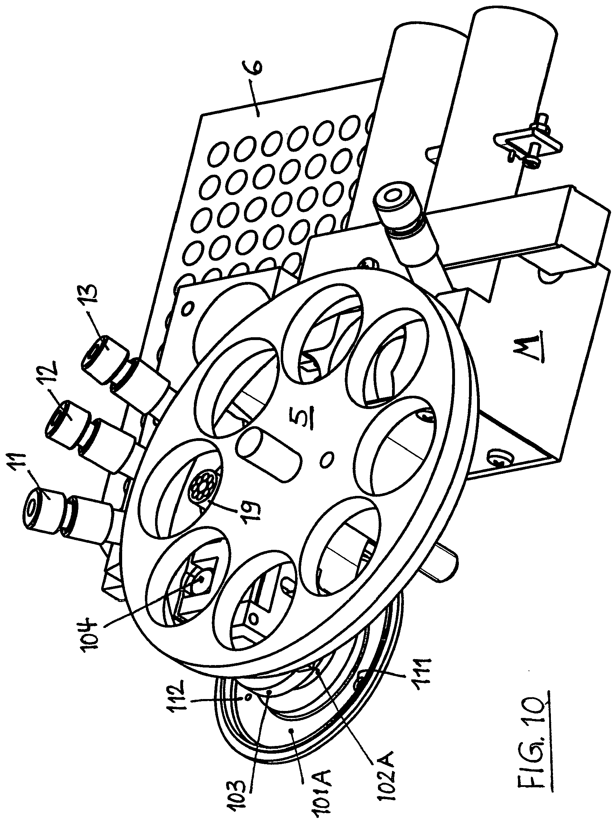

- Fig. 10:: eine perspektivische Ansicht von oben auf die Anordnung gemäss Figur 6,

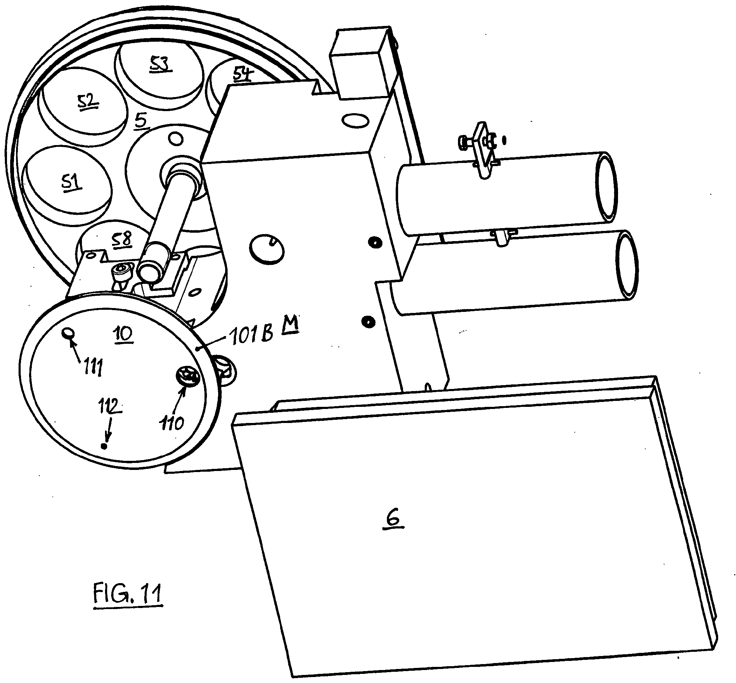

- Fig. 11:: eine perspektivische Ansicht von unten auf die Anordnung gemäss Figur 6,

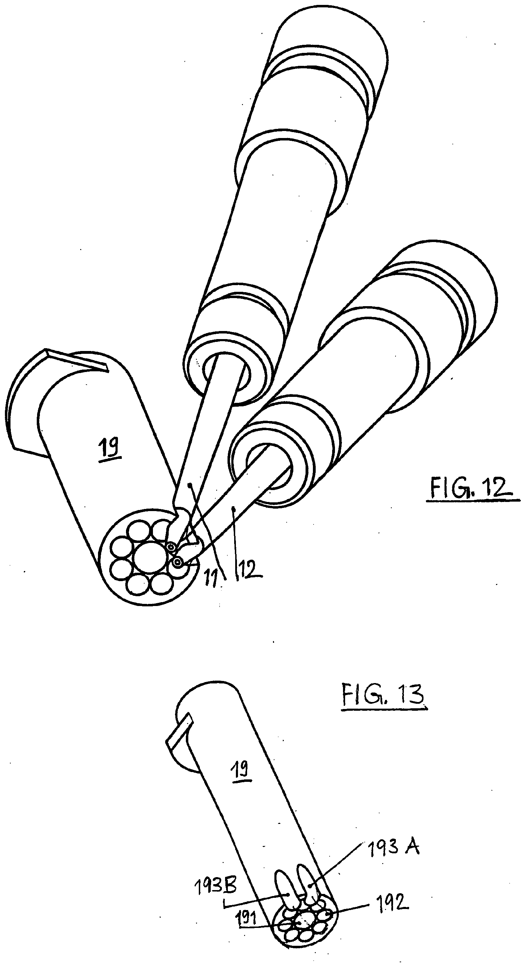

- Fig. 12:: eine perspektivische Ansicht des Lichtleiters,
- Fig. 13:: der Lichtleiter gemäss Figur 12 mit eingesetzten Injektoren,
- Fig. 14:: eine Unteransicht des Lichtleiters,
- Fig. 15:: eine perspektivische Teildarstellung des Blendenrads, und
- Fig. 16:: eine Detaildarstellung des Filterrads.

### Beschreibung der bevorzugten Ausführungsbeispiele

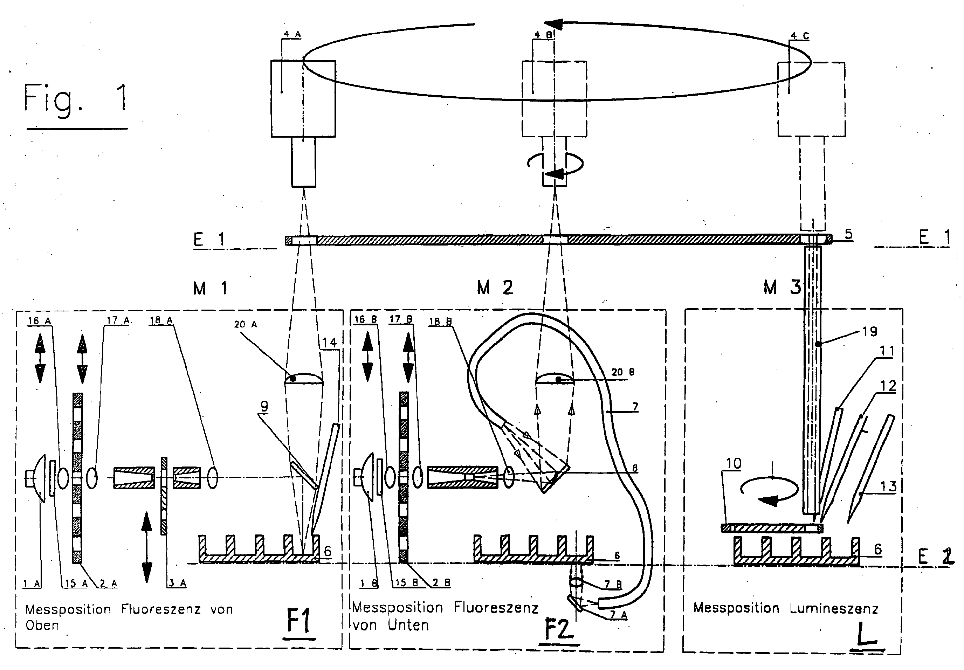

Figur 1 zeigt eine Übersichtsdarstellung der Bauteile der erfindungsgemäßen Vorrichtung am Beispiel von drei Messlichtpfaden, einem ersten Messlichtpfad M1 mit einer ersten Fluoreszenzmesseinrichtung F1 für eine Fluoreszenzmessung von oben, einem zweiten Messlichtpfad M2 mit einer zweiten Fluoreszenzmesseinrichtung F2 für eine Fluoreszenzmessung von unten, und einem dritten Messlichtpfad M3 mit einer Lumineszenzmesseinrichtung L für eine Chemilumineszenzmessung mit oder ohne Filter. Bei allen drei Messungen befinden sich die Probenbehälter, die schematisch als Vertiefungen einer Mikroplatte 6 dargestellt sind, auf einer gemeinsamen Probenebene E2, die in der Regel durch eine mittels einer nicht dargestellten Motorik horizontal verschiebbare Aufnahmeplatte für die Mikroplatten 6 realisiert ist. Möglich sind auch andere Probenträger wie z.B. Membrane, bei denen die Proben Photonen emittieren. Der Transportmechanismus der Mikroplatte bringt nacheinander die Probenbehälter mit den zu messenden Proben in Messposition.

Oberhalb der Probenebene E2 und parallel zu dieser liegt in einer Horizontalebene E1 ein Filterträger mit Durchtrittsöffnungen, der mit je nach Art der Messung erforderlichen Emissionsfiltern bestückt ist. Diese Filter können je nach Anwendung Interferenzfilter, Farbglasfilter oder auch Folienfilter sein. Durch die Emissionsfilter wird der Spektralbereich des zum Detektor 4 gelangenden Lichts ausselektiert.

Oberhalb dieser Öffnungen befinden sich Detektoren 4A,4B,4C. Der Filterträger ist so verschieb- oder verdrehbar, dass jede seiner Öffnungen mit einem entsprechenden Filter jedem der Detektoren zugeordnet werden kann. Gemäß einer bevorzugten Ausführungsform der Erfindung sind die Detektoren 4A, 4B, 4C durch einen gemeinsamen verschieb- oder verschwenkbaren Detektor 4 realisiert. Beim dargestellten Ausführungsbeispiel ist der Filterträger als Filterrad 5 mit N im gleichen Abstand zum Mittelpunkt und gleichem Winkelabstand angeordneten Öffnungen zur Aufnahme der Emissionsfilter ausgebildet.

Von besonderer Bedeutung ist, dass durch die Anordnung des Filterrads in einer Horizontalebene E1 im Abstand von der Probenebene E2 Raum für Messeinrichtungen mit voneinander unabhängigen Messlichtpfaden M1, M2 und M3 geschaffen wird.

Die Messlichtpfade M1, M2, M3 enden an dem oder den Detektor(en) unter Zwischenschaltung des Filterrads 5.

Durch die erfindungsgemäße Konstruktion wird das Filterrad 5 somit sowohl für die Lumineszenzmesseinrichtung L als auch für die beiden Fluoreszenzmesseinrichtungen F1 und F2 verwendet. Dies wird dadurch ermöglicht, dass die Messlichtpfade der drei Messeinrichtungen auf demselben Radius wie die Filter enden. Entsprechendes gilt für eine alternative Ausführung des Filterträgers als linearer Schieber, in diesem Falle enden die verschieden Messlichtpfade auf einer Geraden.

Die in Figur 1 schematisch dargestellten Messlichtpfade mit ihren zugeordneten Messeinrichtungen werden nun im einzelnen kurz beschrieben:
Beim ersten Messlichtpfad M1 mit der ersten Fluoreszenzmesseinrichtung F1 zur Messung der Fluoreszenz von oben wird von dem von einer ersten Lichtquelle 1A ausgesendeten Licht zunächst mittels eines Wärmeschutzfilters 15A die unerwünschte Infrarot-Strahlung absorbiert. Mittels einer Anordnung aus Linsen 16A und 17A und einem Anregungsfilter 2A wird die Wellenlänge für die Anregung der Fluoreszenz ausgewählt. Mit einer verschiebbaren Blende 3A kann der Durchmesser des Beleuchtungsstrahls für das jeweilige Format der Mikroplatte 6 ausgewählt werden. Eine Linse 18A bündelt das Anregungslicht für die Beleuchtung des zu messenden Probenbehälters der Mikroplatte 6. Mittels eines teildurchlässigen Spiegels 9 wird das Licht zur Probe innerhalb des genannten Probenbehälters umgelenkt. Das von der zu messenden Probe ausgesendete Fluoreszenzlicht wird mit einer Linse 20A fokussiert und durch eine Öffnung des Filterrads 5 auf den Detektor 4A gelenkt. Mittels des Filterrades 5 erfolgt hierbei die Auswahl des Filters für die jeweilige Emissionswellenlänge. Für spezifische Messungen kann eine Injektionsspitze 14 vorgesehen sein, mit der eine Flüssigkeit in die Probenbehälter der Mikroplatte 6 eingebracht werden kann.

Beim zweiten Messlichtpfad M2 mit der zweiten Fluoreszenzmesseinrichtung F2 für die Messung der Fluoreszenz von unten wird das von einer zweiten Lichtquelle 1B und entsprechendem Wärmeschutzfilter 15B, Anregungsfilter 2B und Linse 18B erzeugte Anregungslicht über einen Umlenkspiegel 8 in einen Lichtleiter 7 eingekoppelt. Der Umlenkspiegel 8 weist in seinem zentralen Teil hierzu die entsprechende Winkelposition auf. Vom Lichtleiter 7 gelangt das austretende Anregungslicht mittels eines Umlenkspiegels 7A und einer Linse 7B auf den Boden des zu messenden Probenbehälters der Mikroplatte 6. Das von der Probe ausgesendete Fluoreszenzlicht wird durch den Lichtleiter 7 zum Umlenkspiegel 8 zurück geleitet und gelangt von dessen Randbereichen, die den entsprechenden Neigungswinkel aufweisen, mittels einer Linse 20B durch eine Öffnung des Filterrads 5 zum Detektor 4B.

Beim dritten Messlichtpfad M3 mit der Chemilumineszenzmesseinrichtung L wird mittels eines Blendenrads 10 eine Anpassung an das jeweilige Format der Mikroplatte 6 vorgenommen. Das oberhalb der Probenebene E2 befindliche Blendenrad 10 weist mehrere Öffnungen auf, die von einem Motor derart in die gewünschte Position gesteuert werden, dass die gewählte Blendenöffnung etwa der Austrittsöffnung eines Probenbehälters entspricht.

Zur Übertragung der Photonen von der Mikroplatte 6 an den Photodetektor 4 dient ein Lichtleiter 19, der einen größeren Durchmesser als die Blende aufweist, um die aus der Probe durch die Blende durchtretenden Photonen möglichst vollständig zu erfassen. Man kann hierzu einen massiven Lichtleiter einsetzen oder eine Anordnung von Einzelfasern, z. B. ein Bündel von 1 mm Fasern. Mittels Injektoren 11,12,13 wird das die Chemilumineszenz anregende Reagens in die Probenbehälter der Mikroplatte 6 eingegeben. Die Lumineszenzstrahlung gelangt dann über den Lichtleiter 19 durch eine Öffnung des Filterrades 5 zum Detektor 4C. Bei Standardapplikationen zur Chemilumineszenzmessung muss in dieser Öffnung des Filterrades 5 kein Filter verwendet werden, bei BRET-Applikationen müssen entsprechende Filter nacheinander in Position gebracht werden.

Die Konstruktion sämtlicher Messeinrichtungen ist also derart ausgeführt, dass der Abstand zwischen Mikroplatte und Filterrad stets derselbe ist. Dadurch liegen Mikroplatte, Filterrad und Detektor in drei parallelen Ebenen übereinander, was zu einer besonders kostengünstigen und messtechnisch effizienten Lösung führt.

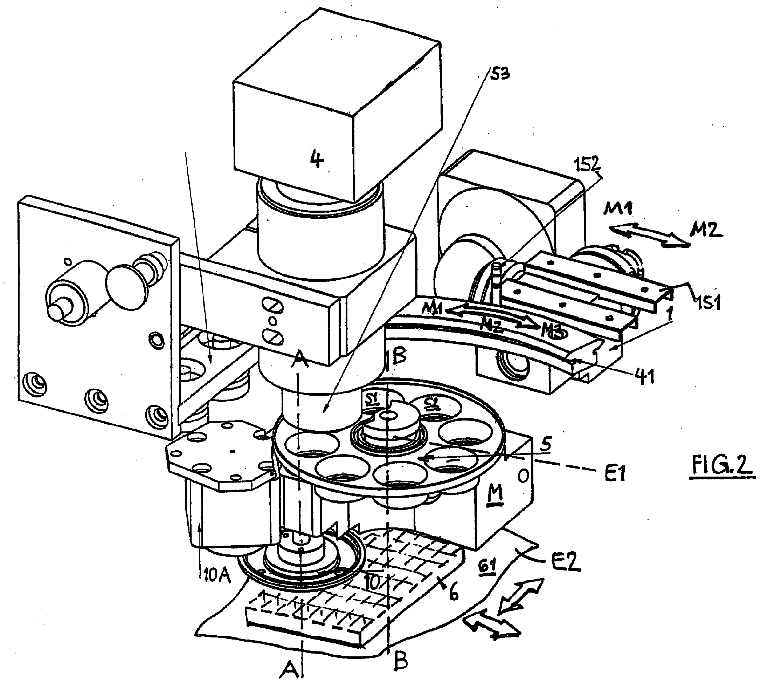

Figur 2 zeigt die wesentlichen Bauteile der oben beschriebenen Anordnung in ihrer räumlichen Zuordnung, wobei zunächst von der Darstellung der rein mechanischen Einrichtungen zur Montage und zur Halterung abgesehen ist.

Auf einer horizontal und vertikal verschiebbaren Aufnahmeplatte 61, die die Ebene E2 bildet, ist die Mikroplatte 6 mit den Probenbehältern unter der Vorrichtung so verfahrbar, dass die jeweils mittels einer bestimmten Messung auszuwertende Probe in den für diese Messung vorgesehenen Messlichtpfad eingebracht wird. Die jeweiligen Messpositionen sind dabei in der Regel verschieden, die Messpositionen für die Messungen 'Fluoreszenz von oben' und 'Fluoreszenz von unten' können dabei jedoch grundsätzlich auch identisch sein, da sich die beiden Messlichtpfade M1 und M2 ausgehend vom Probenbehälter nicht überschneiden.

In der Horizontalebene E1 ist das Filterrad 5 um eine Vertikalachse drehbar gelagert. Der Elektromotor 10A dreht das Filterrad 5 über einen Zahnradeingriff, bis die Öffnung mit dem gewünschten Filter im Messlichtpfad liegt, damit ist ein schneller automatischer Filterwechsel möglich.

Beim dargestellten Ausführungsbeispiel entspricht der Abstand der Messlichtpfade M1, M2, M3 dem Abstand der Filter, da dann jedem Messverfahren ein "Standardfilter" zugeordnet werden kann, was einen Filterwechsel beim Wechsel des Messverfahrens seltener erforderlich macht.

Das Filterrad 5 weist beim dargestellten Ausführungsbeispiel acht Öffnungen 51...58 auf, die wahlweise mit geeigneten (in Figur 2 nicht dargestellten) Emissionsfiltern belegt werden können. Oberhalb des Filterrades 5 ist (anstelle der ebenfalls möglichen separaten Detektoren 4A...4C in Figur 1) ein gemeinsamer Strahlungsdetektor 4 auf einer Kreisbogenschiene 41 derart verfahrbar gehalten, dass seine Eintrittsöffnung kreisbogenförmig über dem Filterrad 5 verfahrbar ist, wobei er auf diesem Kreisbogen die in Figur 1 skizzierten drei Messpositionen als Endpunkt der drei Messlichtpfade M1,M2,M3 einnehmen kann. Der Radius des Kreisbogens, den der Mittelpunkt der Eintrittsöffnung des Detektors 4 dabei beschreibt, entspricht dem Radius des durch die Mittelpunkte der Öffnungen 51...58 verlaufenden Kreises, so dass es auf diese Weise möglich ist, jeder der Messpositionen des Detektors 4 jede der Öffnungen 51...58 mit den spezifisch vorgesehenen Filtern zuzuordnen.

Gemäß einer vorteilhaften Ausgestaltung der Erfindung sind die beiden Lichtquellen 1A und 1B durch eine gemeinsame Lichtquelle 1 (Figur 2) realisiert, die zwischen den Anfangspunkten der Messlichtpfade M1 und M2 verschiebbar oder verdrehbar gehalten ist. In der gezeigten Ausführungsform ist das Modul bestehend aus Lichtquelle 1, Wärmeschutzfilter 15 und erster Linse 15A,15B mittels einer Linearführung 151 verschiebbar gelagert. Durch eine Feder 152 wird es in eine der beiden Positionen gebracht. Durch die auf einer Kreisführung befestigte Detektorhalterung wird das Modul beim Verfahren in die zweite Fluoreszenzmessposition automatisch mitbewegt und befindet sich dann an der für die Einkopplung des Anregungslichtes notwendigen Stelle.

Die Fluoreszenz-Messlichtpfade M1 und M2 sind in ihrer räumlichen Zuordnung und Anordnung durch die in Figur 1 dargestellten Komponenten vorgegeben, die im Messblock M untergebracht sind. Im Messblock M befinden sich somit die Bauteile 2A/2B, 3, 15A/15B, die beiden Spiegelanordnungen 8 und 9, das eine Ende des Lichtleiters 7 und die beiden "Austrittslinsen" 20A und 20B. Die Position der Linsen 16A/16B und 20A/20B definiert somit den eingangsseitigen und ausgangsseitigen "Abstand" der Messlichtpfade M1 und M2 am Messblock M, wobei der eingangsseitige Abstand dem Verfahrweg der Lampe 1 auf der Linearführung 151 entspricht, der ausgangsseitige Abstand dem Verfahrweg des Detektors 4 auf der Bogenschiene 41, wie dies auch aus Figur 1 entnehmbar ist.

Beim in Figur 2 dargestellten Ausführungsbeispiel befindet sich der Detektor 4 in der Lumineszenz-Messposition, also am Ende des dritten Messlichtpfades M3, der von der Mikrotiterplatte 6 über den Lichtleiter 19 durch eine der Öffnungen 51...58 des Filterrades 5 zum Detektor 4 verläuft.

Die Anordnung der Messlichtpfade ist jedoch insofern beliebig, als sie im wesentlichen durch die Anordnung der Bauteile im Messblock M und die Führung des Lichtleiters 7 oder auch der Führung des Lichtleiters 19 vorgegeben werden kann, in jedem Fall enden jedoch alle Messlichtpfade auf dem durch die Mittelpunkte der Öffnungen 51...58 vorgegebenen Kreis.

Die erfindungsgemäße Vorrichtung, wie sie in den Figuren 1 und 2 dargestellt ist, benutzt grundsätzlich für jeden Messlichtpfad eine eigene für das jeweilige Messverfahren optimierte Messeinrichtung mit individueller Strahlungsoptik, soweit erforderlich; es werden nur diejenigen Bauteile gemeinsam verwendet (Lampe 1, Detektor 4, Filterrad 5), die für den jeweiligen Messmodus optimal geeignet oder optimierbar sind, so dass eine kompakte Gestaltung der gesamten Anordnung möglich ist, ohne auf die Messqualität von drei Einzelgeräten verzichten zu müssen.

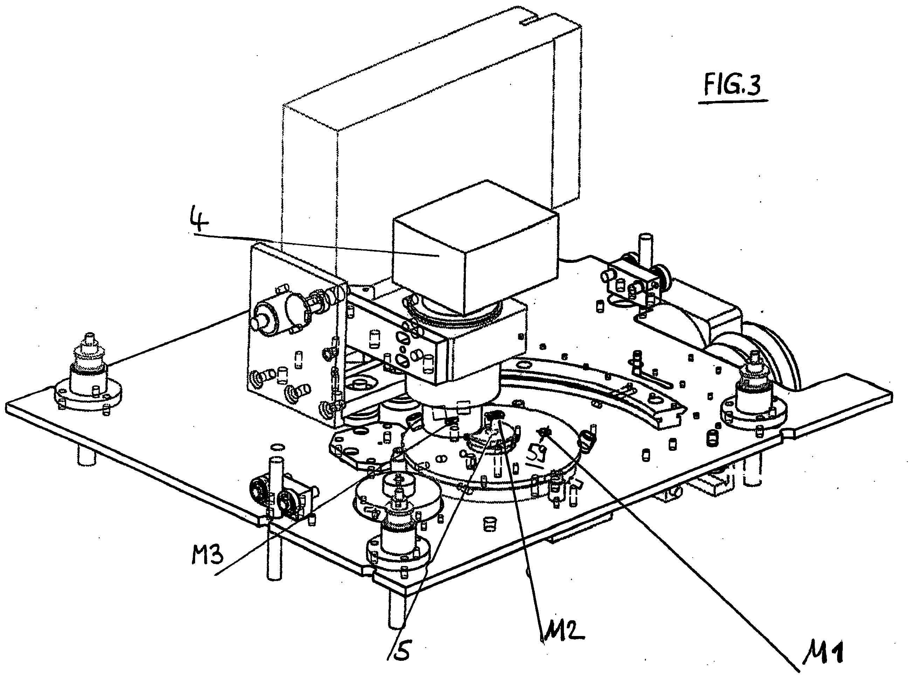

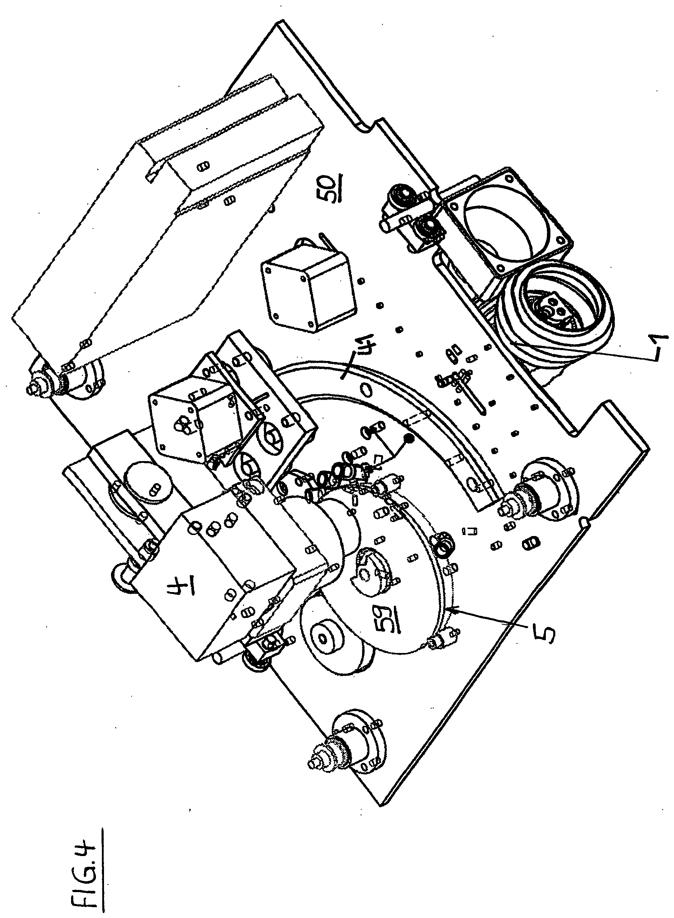

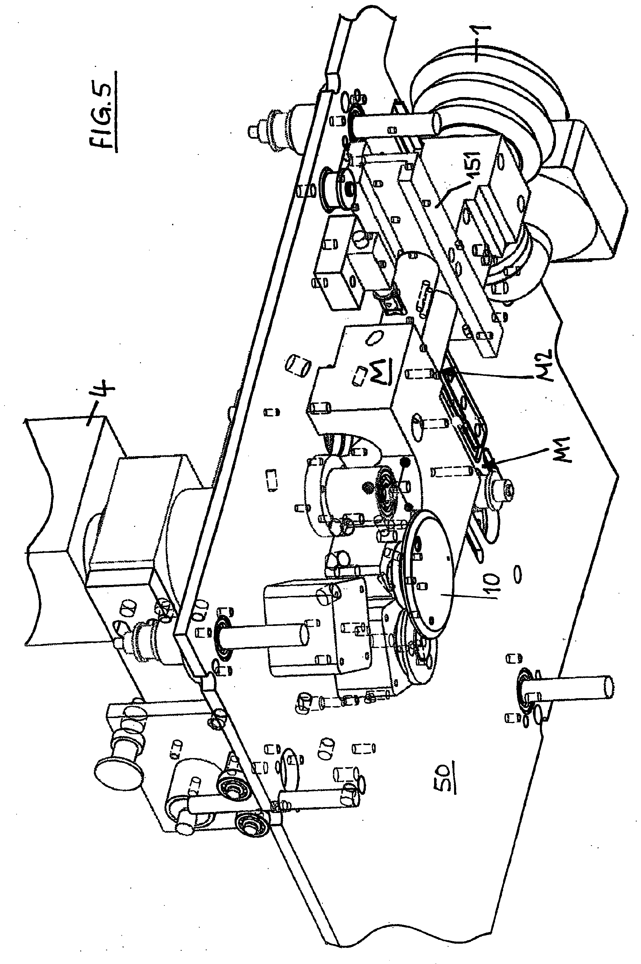

Die Figuren 3 bis 5 zeigen weitere konstruktive Gestaltungsmerkmale, wie die erfindungsgemäße Vorrichtung in ein konkretes Gerät umgesetzt ist, es handelt sich hierbei insbesondere um eine Trägerplatte 50, auf bzw. an der die oben beschriebenen Bauteile montiert sind. Durch eine Abdeckung 59 über dem Filterträger mit einer Öffnung für den aktiven Messlichtpfad zum Detektor 4 wird erreicht, dass kein Streulicht von einem benachbarten Messpfad zum Detektor gelangen kann. Sie ist gemeinsam mit dem Filterrad gelagert und wird durch den Detektor so mitbewegt, dass sich die Öffnung jeweils über dem aktiven Messlichtpfad befindet.

Sofern ein Lumineszenzmessgerät als stand-alone Gerät geschaffen werden soll, entspricht dies in seinem Gesamtaufbau dem in den Figuren 2-5 dargestellten Aufbau unter Weglassung derjenigen Komponenten, die für die Fluoreszenzmessungen erforderlich sind, so dass auf eine nähere Beschreibung des Gesamtaufbaus eines derartigen Lumineszenzmessgeräts verzichtet wird.

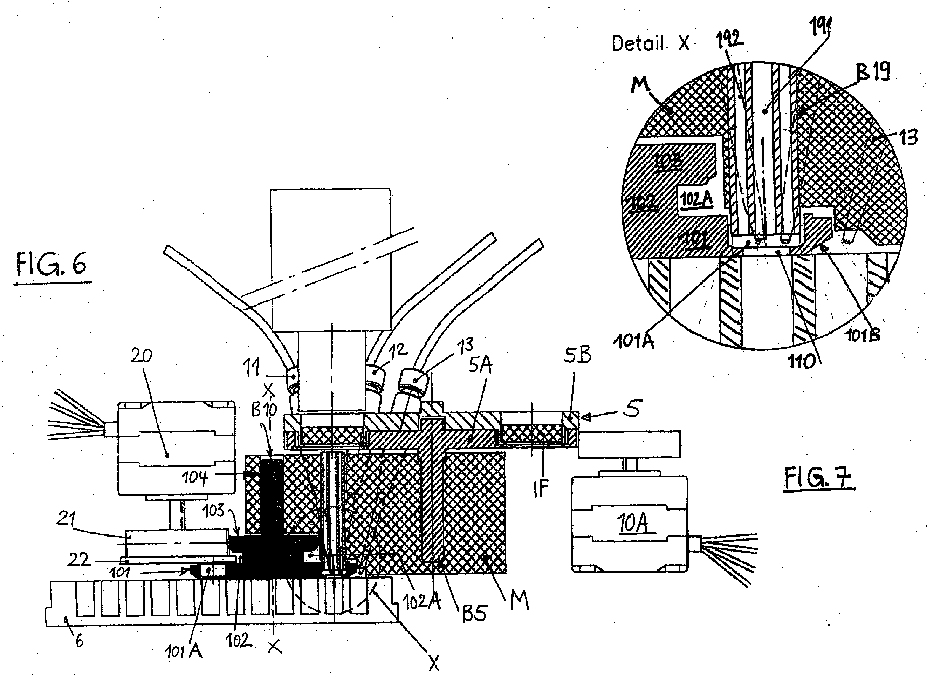

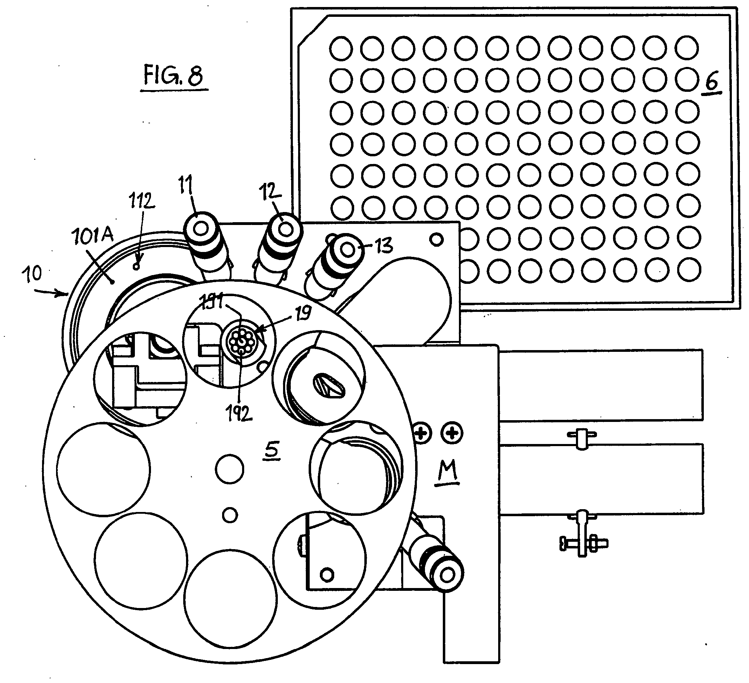

Die konstruktive Ausgestaltung der Lumineszenzmessung ist von besonderer Bedeutung wegen ihrer Eignung auch für solche Lumineszenzmessungen, die mindestens einen Filter verlangen. Eine besonders bevorzugte Ausgestaltung der Lumineszenzmessung sowohl im Rahmen des oben beschriebenen Mehrfachmessgeräts als auch im Rahmen eines Lumineszenzmessgeräts als Einzelgerät soll daher anhand der Figuren 6-8 unter Bezugnahme auf die Lumineszenzeinrichtung L näher beschrieben werden:
Die wesentlichen Bauteile der Lumineszenzmesseinrichtung L sind auch im Messblock M, der zwischen Mikroplatte 6 und Filterrad 5 angeordnet ist, gehalten und einander zugeordnet. Die zu messenden Proben befinden sich in den Messgefäßen (Vertiefungen) der Mikroplatte 6.

Der Messblock M weist drei vertikale Bohrungen auf: eine Bohrung B10 für das Blendenrad 10, eine Bohrung B19 für den Lichtleiter 19, und eine Bohrung B 5 für die Aufnahme des zweigeteilt ausgeführten Filterrads 5.

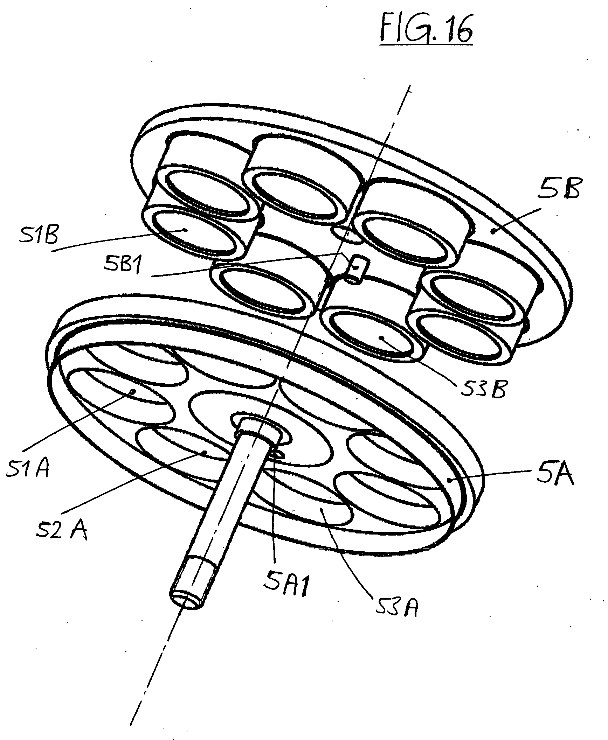

Eine bevorzugte Ausgestaltung des Filterrads 5 ist in Figur 16 dargestellt:
Das Filterrad 5 besteht aus einem unteren Teil 5A als Aufnahmeteil mit Öffnungen 51A...58A, das in die Bohrung B 5 im Messblock M eingesetzt wird, und aus einem oberen Teil 5B mit zylindrischen Aufnahmen 51B...58B für die Aufnahme von Emissionsfiltern IF. Die beiden Teile 5A und 5B sind derart ineinandergesetzt, dass die Aufnahmen 51B.... in die Öffnungen 51A...... eingreifen (Figur 6), wobei ein Kodierstift 5B1 in eine Aussparung 5A1 im unteren Teil eingreift, so dass eine eindeutige Zuordnung der Aufnahmen 51B.... zu den Öffnungen 51A.... gesichert ist.

Diese Lösung vereinfacht die Umrüstung der Vorrichtung auf einen anderen Satz von Emissionsfiltern insbesondere beim Wechsel des Messverfahrens erheblich, da nicht das gesamte Filterrad 5 aus dem Messblock M entfernt werden muss, sondern (nach Freigabe des erforderlichen Raums bspw. durch Wegschwenken des Detektors 4) lediglich ein Austausch des oberen Teils 5B erfolgen muss. Zweckmässigerweise können hierzu mehrere Sätze von oberen Teilen 5B mit einer bestimmten Anordnung von Emissionsfiltern zum schnellen Austausch bereit gehalten werden.

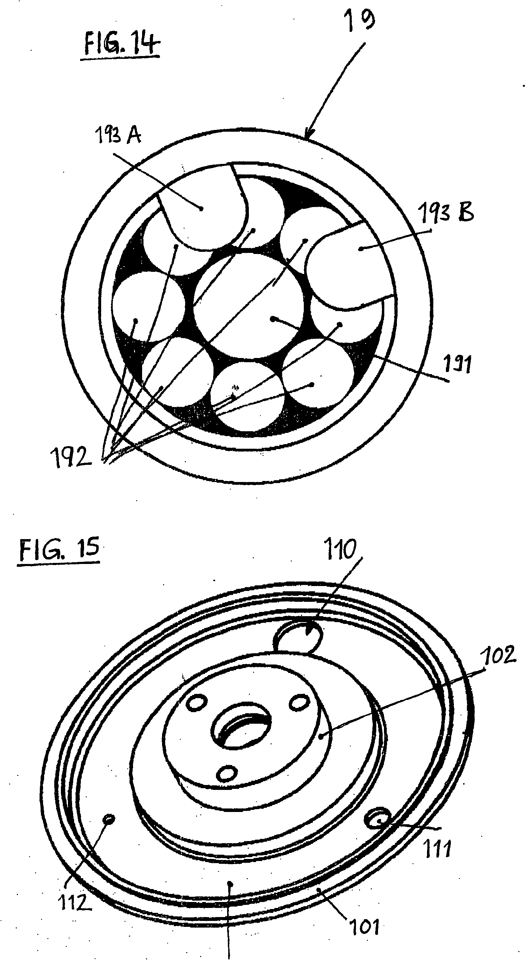

Das Blendenrad 10 ist im wesentlichen ein Rotationskörper mit 4 Abschnitten unterschiedlicher Radien, der bspw. als einstückiges Kunststoffformteil hergestellt sein kann, aber auch in Form mehrerer zylindrischer Körper, die miteinander verbunden werden, Figur 15 zeigt einen solchen Teil des Blendenrads.

Der erste, unterste Abschnitt 101 mit dem grössten Radius beinhaltet in einer ringförmigen Rinne 101 A die eigentlichen Blenden in Form von Öffnungen 110,111,112 unterschiedlichen Durchmessers. Um sich an die verschiedenen Durchmesser der MessgefäßeNertiefungen unterschiedlicher Mikroplatten anzupassen, können unterschiedliche Blendenöffnungen zwischen Messgefäß und Lichtleiter positioniert werden. Die Mittelpunkte der dargestellten drei Öffnungen 110,111,112 (die Gesamtzahl könnte z.B. bis zu 8 betragen) liegen alle auf dem selben Radius um die Achse X-X des Blendenrads 10. Als Durchmesser der Blendenöffnungen 110,111,112 sind z.B. 6,0 mm, 3,0 mm und 1,5 mm gewählt, entsprechend Mikroplatten mit 96, 384 und 1536 Vertiefungen als Probenbehälter.

Der zweite Abschnitt 102 des Blendenrads 10 weist einen geringeren Radius auf als der erste Abschnitt 101, der weiter oben liegende dritte Abschnitt 103 wiederum einen grösseren Radius, so dass eine umlaufende Rinne 102 A gebildet wird.

Oberhalb schliesst sich schliesslich der vierte Abschnitt 104 an, der sich fast bis zur Oberfläche des Messblocks M erstreckt und der im Wesentlichen der sicheren vertikalen Führung des Blendenrads 10 dient, aber dessen vertikale Verschiebung in geringem Ausmass zulässt.

Seitlich vom Messblock M ist ein Motor 20 angeordnet, der ein Zahnrad 21 aufweist, das mit am Umfang des dritten Abschnitts 103 des Blendenrads 10 angebrachten Zähnen in Eingriff steht, so dass bei einer Aktivierung des Motors 20 eine Drehung des Blendenrads 10 um einen solchen Winkel gesteuert werden kann, bei dem sich eine der Blendenöffnungen 110,111, oder 112 exakt in Messposition über der Austrittsöffnung einer Vertiefung der Mikroplatte 6 mit der zu messenden Probe befindet, wenn diese unter der Blendenplatte 10 vorbei bewegt wird. Damit ist ein schneller Blendenwechsel bei einem Wechsel des Typs der Mikroplatte 6 möglich.
Unterhalb des Zahnrads 21 befindet sich eine Scheibe 22, die in die Rinne 102 A eingreift, wobei die Höhen von Scheibe 22, Rinne 102, Zahnrad 22 und drittem Abschnitt 103 derart bemessen sind, dass eine Vertikalbewegung des Blendenrads 10 zwischen zwei Endpositionen unter Beibehaltung des Zahneingriffs möglich ist.

Damit wird einerseits erreicht, dass das Blendenrad 10 nicht aus dem Messblock M heraus fallen kann, wenn sich keine Mikroplatte 6 darunter befindet, es wird aber auch eine automatische Höhenanpassung erreicht in dem Sinne, dass auch bei Masstoleranzen in der Höhe der Austrittsöffnungen der Probenbehälter in der Messposition der Mikroplatte 6 das Blendenrad 10 mit seinem Eigengewicht auf der Mikroplatte 6 aufliegt, so dass es zu keiner Spaltbildung zwischen Mikroplatte 6 und Blendenrad 10 kommen kann, wodurch cross-talk-Effekte zuverlässig vermieden werden.

Die Unterkante des ersten Abschnitts 101 ist in Form einer Rampe 101B abgeschrägt, so dass sie aus ihrer unteren Endposition (keine Mikroplatte in Messposition) beim Einfahren einer Mikroplatte automatisch auf das aktuelle Messniveau angehoben wird.

In die Rinne 101 A des ersten Abschnitts 101 ragt das untere Ende des Lichtleiters 19 mit knappem Spiel (0,1 - 0,2 mm), so dass die einander gegenüber liegenden Flächen von Lichtleiterende, Abschnitt 101 und Messblock M ein optisches Labyrinth bilden, so dass auch hier keine Streulichteffekte auftreten können.

Der Lichtleiter kann als zylindrischer Block z.B. aus transparentem Plexiglas, Glas oder Quarz ausgeführt sein, wobei die Zylinderwand mit reflektierendem Material versehen werden kann, z.B. Titanoxyd oder Metallisierung. Die dargestellte, besonders bevorzugte Ausführungsform des Lichtleiters 19 ist eine Zusammenfassung von einzelnen Lichtleiterfasern 191, 192 zu einem Bündel, aus welchem durch Vergießen mit Kunststoffmaterial ein starres und formstabiles Optik-Modul hergestellt wird. Da das Licht aus dem Messgefäß nicht parallel nach oben, sondern ungerichtet austritt, werden Lichtleiterfasern verwendet, die das Licht mit einem nicht zu kleinen Eintrittskegel bzw. Eintrittswinkel eintreten lassen, um eine möglichst hohe Photonenausbeute zu erzielen. Da der Eintrittswinkel auch den Austrittswinkel aus dem Lichtleiter 19 bestimmt, darf aber auch ein Maximalwert nicht überschritten werden, damit die am oberen Ende des Lichtleiters 19 austretenden Lichtstrahlen eine maximale Divergenz nicht überschreiten, weil dadurch die Funktion von Interferenzfiltern IF (Figur 6) im Filterrad 5 beeinträchtigt würde, welche am besten bei senkrecht auf das Filter auffallenden Lichtstrahlen funktionieren. Als in diesem Sinne optimaler Kompromiss hat sich ein Wert für den Eintrittswinkel von etwa 15° gegen die optische Achse gezeigt.

Der Lichtleiter 19 besteht zur Erreichung dieses Kompromisses beim bevorzugten Ausführungsbeispiel aus einer zentralen Faser 191 mit 3 mm Durchmesser sowie 8 Fasern 192 mit einem Durchmesser von jeweils 2 mm.

Zwei Aussparungen 193A, 193B am unteren Rand des Lichtleiters 19 dienen der Aufnahme der Injektionsspitzen 11 und 12 für die Zugabe von Regenzien zu der Probe vor, während oder nach der Messung. Dadurch können zwei Reagenzien durch die ausgewählte Blendenöffnung 110,111,112 hindurch in die in Messposition befindliche Probe injiziert werden, und die dadurch ausgelöste Lumineszenzreaktion kann ohne Verzögerung gemessen werden. Ein oder mehrere weitere Injektoren 13 können in außerhalb der Messposition gelegene Messgefäße injizieren.

Das am oberen Ende des Lichtleiters 19 austretende Licht durchtritt eine der Öffnungen 51....58 des Filterrads 5, bevor es auf den Detektor 4 trifft und dort gemessen wird. Je nach Art der durchzuführenden Lumineszenzmessung befindet sich in den Öffnungen mindestens ein passender Filter IF (z.B. 2 Filter für BRET-Messungen) oder kein Filter für übliche Lumineszenzmessungen.

Die beschriebene Chemilumineneszenzmesseinrichtung ist besonders gut für die Einbindung in die Vorrichtung als "Multilabel-Reader" geeignet. Die Ausgestaltung der Chemilumineszenzmesseinrichtung machen das Gerät aber auch als stand-alone Gerät für BRET-Messungen besonders geeignet.

Das erfindungsgemäße Gerät deckt somit einen weiten Einsatzbereich ab; es kann komplett oder wahlweise mit einzelnen Messeinrichtungen ausgestattet werden, deren Messlichtpfade lediglich an einer von den Filtern des gemeinsamen Filterträgers erreichbaren Position enden müssen, es kann aber auch ggf. später nachgerüstet werden.

## Patentansprüche

1. Vorrichtung zur wahlweisen Messung von mindestens zwei Strahlungen, insbesondere Chemilumineszenz und/oder Fluoreszenz, aus Probenbehältern über mindestens zwei Messlichtpfade mittels mindestens zwei Messeinrichtungen mit mindestens einer Strahlenquelle und mindestens einem Detektor,
wobei die Probenbehälter auf einer gemeinsamen Probenebene (E2) in die Messpositionen verschiebbar sind,
**dadurch gekennzeichnet,**
**dass** ein einziger, in einer Horizontalebene (E1) dreh- oder verschiebbar gehaltener Filterträger vorgesehen ist, der mindestens zwei Öffnungen zur bedarfsweisen Aufnahme von jeweils einem Emissionsfilter aufweist,
**dass** die gemeinsame Probenebene (E2) unterhalb der Horizontalebene (E1) angeordnet ist, und
**dass** zumindest die zwei Messeinrichtungen (F1, L) so zwischen den beiden Ebenen (E1,E2) angeordnet sind, dass jeder ihrer zugeordneten Messlichtpfade durch jede durch Drehung oder Verschiebung des Filterträgers wählbare Öffnung des Filterträgers zum Detektor verlaufen kann, wobei die jeweils mittels einer bestimmten Messung auszuwertende Probe in den für diese Messung vorgesehenen Messlichtpfad eingebracht werden kann.

2. Vorrichtung nach Anspruch 1, **dadurch gekennzeichnet, dass** die Messlichtpfade (M1,M2,M3) voneinander beabstandet durch die Horizontalebene (E1) des Filterträgers verlaufen.

3. Vorrichtung nach Anspruch 1 und 2, **dadurch gekennzeichnet, dass** der Filterträger ein Filterrad (5) mit N in gleichem Abstand zum Mittelpunkt und gleichem Winkelabstand angeordneten Öffnungen (51...58) ist.

4. Vorrichtung nach Anspruch 1 und 2, **dadurch gekennzeichnet, dass** die Messpositionen der Probenbehälter auf der Probenebene (E 2) auf einer Kurve liegen, die in einer Vertikalfläche verläuft, die von den Mittelpunkten der Filter des Filterträgers definiert ist.

5. Vorrichtung nach Anspruch 3, **dadurch gekennzeichnet, dass** der Abstand der Messlichtpfade (M1,M2,M3) beim Durchgang durch das Filterrad (5) bzw. dessen Horizontalebene (E1) dem Abstand der Mittelpunkte der Öffnungen (51...58) des Filterrads (5) entspricht.

6. Vorrichtung nach Anspruch 1, **dadurch gekennzeichnet, dass** ein gemeinsamer Detektor (4) vorgesehen ist, der oberhalb des Filterrads (5) zu den Messlichtpfaden (M1,M2,M3) verfahrbar ist.

7. Vorrichtung nach Anspruch 3 und 5, **dadurch gekennzeichnet, dass** der Detektor (4) kreisbogenförmig über die von den Messlichtpfaden (M1,M2,M3) benutzten Öffnungen (51,52,53) des Filterrads (5) geführt ist.

8. Vorrichtung nach Anspruch 1, **dadurch gekennzeichnet, dass** mindestens zwei Messlichtpfade (M1,M2) mit Fluoreszenzmesseinrichtungen (F1,F2) vorgesehen sind, in die die Strahlung von mindestens einer Strahlenquelle zur Fluoreszenzanregung eingekoppelt wird.

9. Vorrichtung nach Anspruch 8, **dadurch gekennzeichnet, dass** für eine Fluoreszenzmessung von oben die erste Fluoreszenzmesseinrichtung (F1) eine erste Spiegelanordnung (9) beinhaltet, von der die Anregungsstrahlung einer Lampe (1A) an die Oberseite eines Probenbehälters gelangt.

10. Vorrichtung nach Anspruch 8, **dadurch gekennzeichnet, dass** für eine Fluoreszenzmessung von unten die zweite Fluoreszenzmesseinrichtung (F2) eine zweite Spiegelanordnung (8) beinhaltet, von der die Anregungsstrahlung einer Lampe (1B) über einen Lichtleiter (7) an die Unterseite eines Probenbehälters und zurück zur Spiegel-anordnung (8) gelangt.

11. Vorrichtung nach Anspruch 9 und 10, **dadurch gekennzeichnet, dass** die Fluoreszenzmesseinrichtungen (F1,F2) eine gemeinsame Lampe (1) als Strahlenquelle beinhalten, die zu den Messlichtpfaden (M1,M2) verfahrbar ist.

12. Vorrichtung nach Anspruch 1, **dadurch gekennzeichnet, dass** ein dritter Messlichtpfad (M3) mit einer Lumineszenzmesseinrichtung (L) vorgesehen ist.

13. Vorrichtung nach Anspruch 12, **dadurch gekennzeichnet, dass** in der Lumineszenzmesseinrichtung (L) unmittelbar oberhalb eines Probenbehälters ein Blendenrad (10) mit mehreren Öffnungen (110,111,112) verschiedenen Durchmessers gehalten ist.

14. Vorrichtung nach Anspruch 13, **dadurch gekennzeichnet, dass** das Blendenrad (10) vertikal verschiebbar ist und in der Messposition auf dem Probenbehälter dichtend aufliegt.

15. Vorrichtung nach Anspruch 13, **gekennzeichnet durch** einen sich im Wesentlichen von der Oberseite des Blendenrads (10) bis zur Unterseite des Filterträgers erstreckenden Lichtleiter (19).

16. Vorrichtung nach Anspruch 15, **dadurch gekennzeichnet, dass** der Lichtleiter (19) aus einem gerade verlaufenden Bündel aus Lichtleiterfasern (191,192) gebildet ist.

17. Vorrichtung nach Anspruch 16, **dadurch gekennzeichnet, dass** die verwendeten Lichtleiterfasern einen Eintrittskegel für Licht mit einem Öffnungswinkel von etwa +/- 15° haben.

## Claims

1. Apparatus for selectively measuring at least two radiations, in particular chemiluminescence and/or fluorescence, from sample containers via at least two measurement light paths by means of at least two measuring devices with at least one beam source and at least one detector,
wherein the sample containers can be moved on a common sample plane (E2) into the measurement positions,
**characterised in that** a single filter carrier is provided, said filter carrier being held in such a way that it can be rotated or shifted in a horizontal plane (E1) and having at least two openings for holding in each case one emission filter as required,
**in that** the common sample plane (E2) is arranged below the horizontal plane (E1), and **in that** at least the two measuring devices (F1, L) are arranged between the two planes (E1, E2) in such a way that each of their associated measurement light paths can extend through each opening of the filter holder to the detector, said opening being selectable by rotating or shifting the filter carrier, wherein the respective sample to be evaluated by a particular measurement can be introduced into the measurement light path provided for said measurement.

2. Apparatus according to claim 1, **characterised in that** the measurement light paths (M1, M2, M3) extend, spaced apart from one another, through the horizontal plane (E1) of the filter carrier.

3. Apparatus according to claims 1 and 2, **characterised in that** the filter carrier is a filter wheel (5) having N openings (51 ... 58) arranged at an equal distance from the centre point and at an equal angular spacing.

4. Apparatus according to claims 1 and 2, **characterised in that** the measurement positions of the sample containers on the sample plane (E2) lie on a curve which extends in a vertical plane that is defined by the centre points of the filters of the filter carrier.

5. Apparatus according to claim 3, **characterised in that** the spacing of the measurement light paths (M1, M2, M3) on passing through the filter wheel (5), or the horizontal plane (E1) thereof, corresponds to the spacing of the centre points of the openings (51 ... 58) of the filter wheel (5).

6. Apparatus according to claim 1, **characterised in that** a common detector (4) is provided, which is movable above the filter wheel (5) to the measurement light paths (M1, M2, M3).

7. Apparatus according to claims 3 and 5, **characterised in that** the detector (4) is guided in a circular arc over the openings (51, 52, 53) of the filter wheel (5) which are used by the measurement light paths (M1, M2, M3).

8. Apparatus according to claim 1, **characterised in that** at least two measurement light paths (M1, M2) are provided with fluorescence measuring devices (F1, F2), into which the radiation from at least one beam source is coupled in order to excite fluorescence.

9. Apparatus according to claim 8, **characterised in that**, for a measurement of fluorescence from above, the first fluorescence measuring device (F1) contains a first mirror arrangement (9), from which the exciting radiation of a lamp (1A) passes to the top side of a sample container.

10. Apparatus according to claim 8, **characterised in that**, for a measurement of fluorescence from below, the second fluorescence measuring device (F2) contains a second mirror arrangement (8), from which the exciting radiation of a lamp (1B) passes via an optical waveguide (7) to the underside of a sample container and back to the mirror arrangement (8).

11. Apparatus according to claims 9 and 10, **characterised in that** the fluorescence measuring devices (F1, F2) contain a common lamp (1) as the beam source, which is movable to the measurement light paths (M1, M2).

12. Apparatus according to claim 1, **characterised in that** a third measurement light path (M3) is provided with a luminescence measuring device (L).

13. Apparatus according to claim 12, **characterised in that**, in the luminescence measuring device (L), an aperture wheel (10) having a plurality of openings (110, 111, 112) of various diameters is held directly above a sample container.

14. Apparatus according to claim 13, **characterised in that** the aperture wheel (10) is movable vertically and in the measurement position bears sealingly against the sample container.

15. Apparatus according to claim 13, **characterised by** an optical waveguide (19) which extends essentially from the top side of the aperture wheel (10) to the underside of the filter carrier.

16. Apparatus according to claim 15, **characterised in that** the optical waveguide (19) is formed of a rectilinearly extending bundle of optical waveguide fibres (191, 192).

17. Apparatus according to claim 16, **characterised in that** the optical waveguide fibres used have an entry cone for light with an opening angle of approximately +/- 15°.

## Revendications

1. Dispositif pour mesurer sélectivement au moins deux rayonnements, en particulier la chimioluminescence et/ou la fluorescence, de récipients d'échantillons par l'intermédiaire d'au moins deux trajets de lumière de mesure au moyen d'au moins deux appareils de mesure, comprenant au moins une source de rayonnement et au moins un détecteur,
les récipients d'échantillons étant déplaçables jusque dans les positions de mesure sur un plan d'échantillons (E2) commun,
**caractérisé en ce qu'**
il est prévu un seul porte-filtre maintenu déplaçable ou pivotable dans un plan horizontal (E1), le porte-filtre comprenant au moins deux ouvertures pour, en cas de besoin, recevoir respectivement un filtre d'émission,
**en ce que** le plan d'échantillons (E2) commun est agencé sous le plan horizontal (E1), et
**en ce qu'**au moins les deux appareils de mesure (F1, L) sont agencés entre les deux plans (E1, E2) de sorte que chacun de leur trajet de lumière de mesure associé puisse aller au détecteur à travers chaque ouverture du porte-filtre sélectionnable par pivotement ou déplacement du porte-filtre, chaque échantillon à évaluer au moyen d'une mesure déterminée pouvant être placé dans le trajet de lumière de mesure prévu pour cette mesure.

2. Dispositif selon la revendication 1, **caractérisé en ce que** les trajets de lumière de mesure (M1, M2, M3) traversent à distance l'un de l'autre le plan horizontal (E1) du porte-filtre.

3. Dispositif selon la revendication 1 ou 2, **caractérisé en ce que** le porte-filtre est une roue à filtre (5) comprenant N ouvertures (51-58) disposées à égale distance du centre et réparties selon un écart angulaire égal.

4. Dispositif selon la revendication 1 ou 2, **caractérisé en ce que** les positions de mesure des récipients d'échantillons se situent sur une courbe sur le plan d'échantillon (E2), la courbe s'étendant sur une surface verticale définie par les centres des filtres du porte-filtre.

5. Dispositif selon la revendication 3, **caractérisé en ce que** la distance des trajets de lumière de mesure (M1, M2, M3) lors du passage à travers la roue à filtre (5) respectivement son plan horizontal (E1) correspond à la distance des centres des ouvertures (51-58) de la roue à filtre (5).

6. Dispositif selon la revendication 1, **caractérisé en ce qu'**il est prévu un détecteur (4) commun pouvant être amené aux trajets de lumière de mesure (M1, M2, M3) au-dessus de la roue à filtre (5).

7. Dispositif selon la revendication 3 et 5, **caractérisé en ce que** le détecteur (4) est guidé en arc de cercle au-dessus des ouvertures (51, 52, 53) de la roue à filtre (5) utilisées par les trajets de lumière de mesure (M1, M2, M3).

8. Dispositif selon la revendication 1, **caractérisé en ce qu'**il est prévu au moins deux trajets de lumière de mesure (M1, M2) comprenant des appareils de mesure de fluorescence (F1, F2) dans lesquels est injecté le rayonnement d'au moins une source de rayonnement pour l'excitation de fluorescence.

9. Dispositif selon la revendication 8, **caractérisé en ce que** le premier appareil de mesure de fluorescence (F1) comprend pour une mesure de la fluorescence depuis le dessus un premier agencement de miroir (9), depuis lequel le rayonnement d'excitation d'une lampe (1A) atteint le côté supérieur d'un récipient d'échantillons.

10. Dispositif selon la revendication 8, **caractérisé en ce que** le deuxième appareil de mesure de fluorescence (F2) comprend pour une mesure de la fluorescence depuis le dessous un deuxième agencement de miroir (8), depuis lequel le rayonnement d'excitation d'une lampe (1B) atteint par l'intermédiaire d'un conducteur de lumière (7) le côté inférieur d'un récipient d'échantillons et revient à l'agencement de miroir (8).

11. Dispositif selon la revendication 9 et 10, **caractérisé en ce que** les appareils de mesure de fluorescence (F1, F2) comprennent une lampe commune (1) comme source de rayonnement, qui peut être amenée aux trajets de lumière de mesure (M1, M2).

12. Dispositif selon la revendication 1, **caractérisé en ce qu'**il est prévu un troisième trajet de lumière de mesure (M3) comprenant un appareil de mesure de la luminescence (L).

13. Dispositif selon la revendication 12, **caractérisé en ce qu'**une roue à diaphragme (10) comprenant plusieurs ouvertures (110, 111, 112) de diamètres différents est maintenue dans l'appareil de mesure de la luminescence (L) immédiatement au-dessus d'un récipient d'échantillons.

14. Dispositif selon la revendication 13, **caractérisé en ce que** la roue à diaphragme (10) est déplaçable verticalement et s'applique hermétiquement sur le récipient d'échantillons dans la position de mesure.

15. Dispositif selon la revendication 13, **caractérisé par** un conducteur de lumière (19) s'étendant sensiblement depuis le côté supérieur de la roue à diaphragme (10) jusqu'au côté inférieur du porte-filtre.

16. Dispositif selon la revendication 15, **caractérisé en ce que** le conducteur de lumière (19) est formé d'un faisceau de fibres optiques (191, 192) s'étendant de manière rectiligne.

17. Dispositif selon la revendication 16, **caractérisé en ce que** les fibres optiques utilisées présentent un cône d'acceptance pour la lumière avec un angle d'ouverture d'environ +/- 15°.
